# EUROPEAN PATENT SPECIFICATION

(11) **EP 2 869 178 B1**
(45) Date of publication and mention of the grant of the patent: **06.01.2021**
(21) Application number: 14188669.7
(22) Date of filing: 13.10.2014
(51) Int. Cl.: G06F 3/0488, G06F 3/0481, G06F 3/01, G06F 3/041, G06F 3/0484

(54) **Information input apparatus, information input method, and computer program**
Informationseingabeeinheit, Informationseingabeverfahren und Computerprogramm
Appareil d'entrée d'informations, procédé d'entrée d'informations et programme informatique

(30) Priority: 05.11.2013 JP 2013229634
(43) Date of publication of application: 06.05.2015
(73) Proprietor: Sony Corporation, Tokyo 108-0075 (JP)
(72) Inventor: Yamada, Masayuki, Tokyo, 108-0075 (JP); Sakai, Yusuke, Tokyo, 108-0075 (JP)
(74) Representative: Witte, Weller & Partner Patentanwälte mbB

(56) References cited:
- WO-A1-2013/105493
- US-A1- 2013 194 238

## Description

### CROSS REFERENCE TO RELATED APPLICATIONS

This application claims the benefit of Japanese Priority Patent Application JP 2013-229634 filed November 5, 2013.

### Background

The present disclosure relates to an information input apparatus, an information input method, and a computer program which make it possible to perform a plurality of kinds of input operations.

As a user interface of an information processing apparatus such as a personal computer, a keyboard and a mouse are generally used. These days, a touch panel is often used. For a multifunctional mobile terminal such as an electronic book, a smart phone, and a tablet, a touch panel is used. Further, an information apparatus that inputs a gesture of a user by using a distance image sensor such as a camera is also being increasingly used. On the other hand, for a TV receiver, an air conditioner, a CE (consumer electronics), and the like, a remote controller operation is being widely used.

For example, a user interface apparatus capable of performing a three-dimensional gesture input and a touch input to a display surface has been proposed (see, for example, Japanese Patent Application Laid-open No. 2012-3690). The user interface apparatus determines which of a gesture input area and a contact input area a target object (finger, stylus, or the like) exists on the basis of a distance to the target object. Then, if the target object exists in the gesture input area, on the basis of a shape or an action of the target object, a process is performed as a pointing operation or a gesture input. If the target object is in the contact input area, a process is performed as a pointing operation with respect to a position pointed by the target object. Further, when the pointing operation is performed, the user interface apparatus displays user interface elements such as menu parts on a transparent display.

WO 2013/105493 discloses an information processing apparatus including a control unit to control a user interface based on a determination of a change in position of a user and a state of the user, by detecting a least one information signal input to the apparatus from outside of the apparatus.

US 2013/0194238 A1 discloses an information processing device including a display unit, an object image obtaining unit for obtaining images of objects to be displayed on the screen of the display unit, a rear side obtaining unit for obtaining information related to rear sides of the objects to be displayed on the screen of the display unit, and a calculating unit for processing the images of the objects, based on the rear sides of the objects obtained by the rear side obtaining unit.

### Summary

In view of the circumstances as described above, it is desirable to provide an information input apparatus, an information input method, and a computer program that are excellent and capable of performing input operations of a plurality of kinds.

According to an embodiment of the present technology, there is provided an information input apparatus, an information input method and a computer program as set out in the independent claims.

According to the embodiment of the present technology, in the information input apparatus, the detection unit determines which range of a short distance, a middle distance, and a long distance the target object exists, the short distance being equal to or less than a first distance T1 (T1>0), the middle distance being within a range from the first distance T1 to a second distance T2 (T2>T1), the long distance exceeding the second distance T2. The user interface providing unit provides a user interface for the short distance to the target object at the short distance, provides a user interface for the middle distance to the target object at the middle distance, and provides a user interface for the long distance to the target object at the long distance.

According to the embodiment of the present technology, in the information input apparatus, the user interface providing unit provides a user interface for performing a touch operation to the screen as the user interface for the short distance.

According to the embodiment of the present technology, in the information input apparatus, the user interface providing unit provides a user interface for inputting a gesture as the user interface for the middle distance.

According to the embodiment of the present technology, in the information input apparatus, the user interface providing unit provides a user interface that uses a remote controller as the user interface for the long distance.

According to the embodiment of the present technology, in the information input apparatus, the user interface element display unit displays center coordinates of the user interface element for the target object determined to be at the long distance with the center coordinates fixed to a predetermined position on the screen.

According to the embodiment of the present technology, in the information input apparatus, the user interface element display unit displays center coordinates of the user interface element for the target object determined to be at the middle distance with the center coordinates moved to a position on the screen corresponding to the position of the target object.

According to the embodiment of the present technology, in the information input apparatus, the user interface element display unit displays center coordinates of the user interface element for the target object determined to be at the short distance with the center coordinates fixed to a predetermined position on the screen.

According to the embodiment of the present technology, in the information input apparatus, the user interface element display unit displays a more detailed user interface element for the target object determined to be at the short distance.

According to the embodiment of the present technology, in the information input apparatus, the detection unit analyzes a state of the target object at the middle distance, and the user interface element display unit displays the user interface element depending on the state of the target object.

According to the embodiment of the present technology, in the information input apparatus, the detection unit detects the number of users as target objects and positions of the users, and the user interface element display unit displays the user interface element for each detected user with the user interface element caused to follow the position of each user.

According to the embodiment of the present technology, in the information input apparatus, the detection unit holds information relating to the target object detected and outputs the information, which is held only for a certain time period even if the target object is not detected, to the user interface providing unit and the user interface element display unit.

According to the embodiment of the present technology, in the information input apparatus, when the information relating to the target object output from the detection unit is stopped, the user interface providing unit stops providing a corresponding user interface, and the user interface element display unit stops displaying the user interface element.

The computer program in the embodiment of the present technology is computer-readable in such a manner that a predetermined process is achieved on a computer. In other words, by installing the computer program of this embodiment to a computer, a cooperative operation is implemented on the computer, and thus it is possible to obtain the same operation and effect as the information input apparatus described above.

According to the embodiments of the present technology, it is possible to provide the excellent information input apparatus capable of performing the plurality of kinds of input operations, the information input method, and the computer program.

The information input apparatus according to the present technology is capable of providing an appropriate input method depending on a distance of a user who performs an input operation and switching a display method for the user interface element depending on the distance and the position of the user to optimize the user interface.

It should be noted that the effect disclosed in this specification is merely an example. The effect of the present technology is not limited to this. Further, the present technology may exert other effects in addition to the effect.

These and other objects, features and advantages of the present disclosure will become more apparent in light of the following detailed description of best mode embodiments thereof, as illustrated in the accompanying drawings.

### Brief Description of the Drawings

Fig. 1 is a diagram showing a structural example of a system to which the present technology is applied;
Fig. 2 is a diagram showing an internal structure of an information processing apparatus;
Fig. 3 is a schematic diagram showing a functional structure for automatically selecting a user interface and optimizing a user interface element by the information processing apparatus;
Fig. 4 is a diagram showing a state of the front of the information processing apparatus viewed above thereof;
Fig. 5 is a diagram showing a state in which a user interface element is optimized and displayed on a large screen for a user at a long distance;
Fig. 6 is a diagram showing a state in which the user interface element is optimized and displayed on the large screen for a user at a middle distance;
Fig. 7 is a diagram showing a state in which a user interface element is optimized and displayed on a larger screen for the user at a middle distance in the case where the information processing apparatus has the larger screen;
Fig. 8 is a diagram showing an example of a screen display in which a user interface element is not caused to follow a movement of the user at the middle distance;
Fig. 9 is a diagram showing an example of a screen display in which a user interface element is not caused to follow a movement of the user at the middle distance;
Fig. 10 is a diagram showing a state in which a user interface element display unit optimizes an user interface element and displays the element for a user at a short distance;
Fig. 11 is a diagram showing a state in which the user at the short distance touches the large screen;
Fig. 12 is a diagram showing a state in which the user interface element display unit optimizes the user interface element and displays the element on the large screen for a plurality of users at the middle distance;
Fig. 13 is a diagram showing a state in which the user interface element display unit optimizes the user interface element and displays the element on a larger screen for the plurality of users at the middle distance in the case where the information processing apparatus has the larger screen;
Fig. 14 is a diagram showing an example of a screen display in which an user interface element is not caused to follow a plurality of users at the middle distance;
Fig. 15 is a diagram showing an example of a screen display in which an user interface element is not caused to follow the plurality of users at the middle distance;
Fig. 16 is a flowchart showing a process flow for automatically selecting a user interface and optimizing a user interface element by the information processing apparatus;
Fig. 17 is a flowchart showing a process flow for outputting a result of a detection of a target object by a detection unit; and
Fig. 18 is a flowchart showing a process flow for providing a user interface to the target object by a user interface providing unit and a user interface element display unit.

### Detailed Description of Embodiments

Hereinafter, an embodiment of the present disclosure will be described in detail with reference to the drawings.

### A. System structure

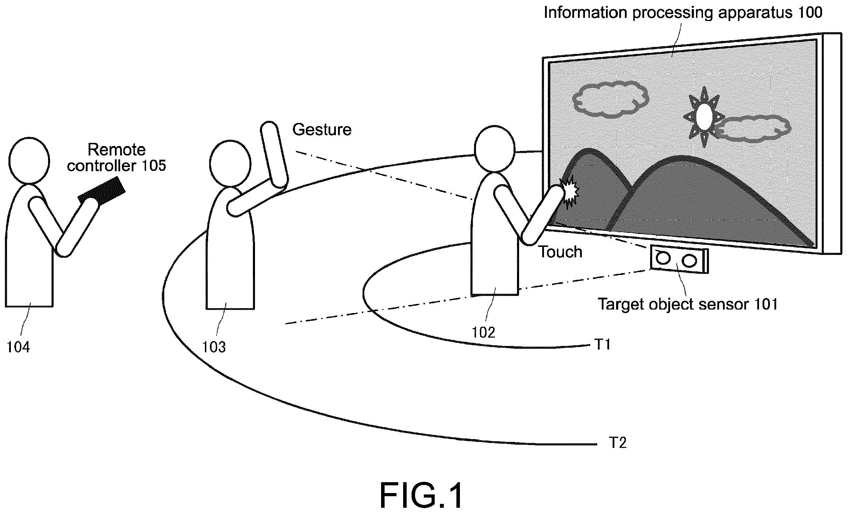

Fig. 1 shows an example of the structure of a system to which the present technology is applied. The system shown in Fig. 1 is constituted of an information processing apparatus 100 and a target object such as a user who tries to operate the information processing apparatus 100. The information processing apparatus 100 has a large screen on a front surface thereof. Fig. 1 shows a use form in which the large screen is transversely placed.

The information processing apparatus 100 is provided with a target object sensor 101 formed of a three-dimensional camera and the like, which is capable of identifying a target object (user who tries to perform an input operation, for example) and detecting a distance and a position of the target object. Further, the information processing apparatus 100 automatically selects an input method for implementing an optimal input operation on the basis of the distance of the user. Furthermore, the information processing apparatus 100 displays a user interface element for performing an operation by the selected input method at an appropriate position on the basis of the position and the distance of the user on the large screen.

In this embodiment, the following three operation methods are considered. That is, the case where the user performs an operation within a distance T1 (T1>0) from the large screen in front of the information processing apparatus 100 (at a short distance), the case where the user performs the operation between the distance T1 and a distance T2 (T2>T1) from the large screen (at a middle distance), and the case where the user performs the operation at a distance exceeding T2 from the large screen (at a long distance) are considered.

Then, the information processing apparatus 100 provides an input method by which an optimal input operation can be implemented to users 102 to 104 who are located at the short distance, at the middle distance, and at the long distance, respectively.

For example, with respect to the user 102 located at the short distance, the information processing apparatus 100 provides a user interface for a short distance, with which the user touches a touch panel provided on the large screen.

Further, with respect to the user 103 located at the middle distance, the target object sensor 101 analyzes the movement of the user 103, and the information processing apparatus 100 provides a user interface for a middle distance, with which the user performs a gesture input. Although the user interface for the gesture input may also be provided to the user 102 at the short distance, the user is too close to the target object sensor 101, and a gesture of the user may be incapable of being read, because movements of hands and legs of the user 102 may be outside of a detection range.

Further, for the user 104 at the long distance, it is difficult to determine a gesture in a taken image of the target object sensor 101. In view of this, the information processing apparatus 100 provides, to the user 104, a user interface for a long distance which uses a remote controller 105. Alternatively, instead of the remote controller 105 (or along with the remote controller 105), a user interface for a long distance, with which a rough gesture input is performed, may be provided. The user interface that uses the remote controller may also be provided to the user 102 at the short distance or the user 103 at the middle distance. However, the users 102 and 103, who can touch the screen or gesture, take the trouble to carry the remote controller 105.

Further, the information processing apparatus 100 performs switching of the display method of the user interface element on the large screen to make it easier to perform the input operation with the provided user interfaces with respect to the users 102 to 104 at the short distance, at the middle distance, and at the long distance, respectively. The user interface element is a displayed object as a target to be subjected to an operation by touch and pointing by the users, including an icon, a menu, a button, an application window, and a slider. In this embodiment, the displayed position and the displayed size of the user interface elements are controlled on the basis of the distance and position of the users, but details thereof will be described later.

It should be noted that in the specification, a description will be given mainly on a mode of switching the user interfaces on three stages of the short distance, the middle distance, and the long distance. However, a mode can also be conceived in which the distance is sectioned into four or more stages to switch the user interfaces.

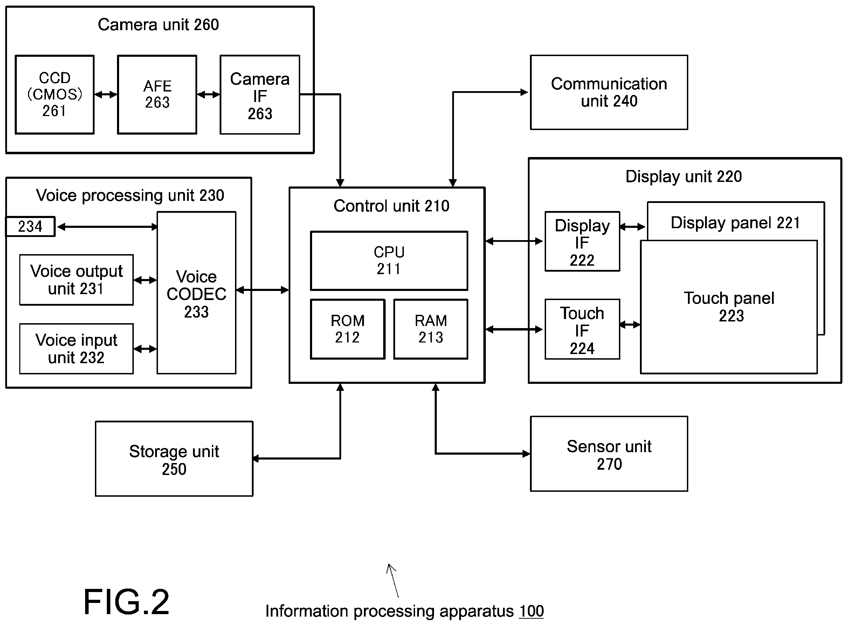

Fig. 2 shows an internal structure of the information processing apparatus 100 having the large screen. The information processing apparatus 100 shown in the figure is formed by connecting, to a control unit 210, a display unit 220, a voice processing unit 230, a communication unit 240, a storage unit 250, a camera unit 260, a sensor unit 270, and the like.

The control unit 210 is constituted of a CPU (central processing unit) 211, a ROM (read only memory) 212, a RAM (random access memory) 213, and the like. In the ROM 212, program codes executed by the CPU 211, information necessary for the information terminal, and the like are stored.

The CPU 211 loads the program codes from the ROM 212 or the storage unit 250 to the RAM 213 to execute the programs. Examples of the programs executed by the CPU 211 include operating systems such as Windows (registered trademark), Android, and iOS, and various application programs operated under an execution environment provided by the operating system.

The display unit 220 is provided with a display panel 221 formed of a liquid crystal element, an organic EL (electro-luminescence) element, or the like and a transparent touch panel 223 provided on an upper surface of the display panel 221 by being bonded. The display panel 221 is connected to the control unit 210 through the display interface 222 and displays and outputs image information generated in the control unit 210. Further, the touch panel 223 is connected to the control unit 210 through the touch interface 224 and outputs coordinate information operated on the display panel 221 by the user with a finger or the stylus to the control unit 210. On the control unit 210 side, on the basis of the input coordinate information, a user operation such as tapping, long pressing, a flick, and a swipe is detected, and a process corresponding to the user operation is started.

The voice processing unit 230 is provided with a voice output unit 231 such as a speaker, a voice input unit 232 such as a microphone, and a voice codec (CODEC) 233 that performs a coding and decoding process for a voice signal input or output. Further, the voice processing unit 230 may be further provided with an output terminal 234 for outputting the voice signal to a headphone (not shown).

The communication unit 240 performs a communication process for information between an application executed by the control unit 210 and an external apparatus. As the external apparatus herein, a server on the Internet can be adopted, for example. The communication unit 240 is equipped with a physical layer such as Wi-Fi (wireless fidelity), NFC (near field communication), and Bluetooth (registered trademark) and a MAC (media access control) layer module, in accordance with a communication medium to be used, and performs a modulation and demodulation process for a communication signal transmitted and received and a coding and decoding process therefor.

In this embodiment, the communication unit 240 performs wireless communication with an access point or another terminal station and receives a remote control command from a remote controller (not shown) that uses a wireless signal as a communication medium. Alternatively, for a remote controller that transmits a remote control command not by the wireless signal but by an infrared signal, the communication unit 240 may be provided with an infrared light reception unit.

The storage unit 250 is formed of a large-volume storage apparatus such as an SSD (solid state drive) and an HDD (hard disc drive). For example, an application program or a content which is downloaded through the communication unit 240, image data such as a still image and a moving image taken with the camera unit 260, and the like are stored in the storage unit 250.

The camera unit 260 is provided with an image sensor 261 that performs photoelectric conversion for light obtained through a lens (not shown), such as a CCD (charge coupled device) and a CMOS (complementary metal oxide semiconductor) and an AFE (analog front end) processing unit 262 that performs noise removal and digitization for a detection signal of the image sensor 261 to generate image data, and outputs the image data generated to the control unit 210 from a camera interface 263.

The sensor unit 270 includes a GPS (global positioning system) sensor for obtaining positional information of the information processing apparatus 100, a gyro sensor for detecting an action force or a position of the main body of the information processing apparatus 100, an acceleration sensor, and the like.

Further, the target object sensor 101 shown in Fig. 1 is included in the sensor unit 270. The target object sensor 101 identifies a target object (user who tries to perform an input operation, for example) and detects a distance and a position of the target object. Alternatively, the camera unit 260 may double as the target object sensor 101. For example, two image sensors that are separately disposed constitute the camera unit 260, thereby making it possible to obtain three-dimensional information of the target object by using parallax information. Further, in the case where the camera unit 260 is formed of one image sensor, an SLAM (simultaneous localization and mapping) image recognition is used to take an image while moving the camera and calculate parallax information with the use of a plurality of frame images temporally successive (for example, see Japanese Patent Application Laid-open No. 2008-304268), with the result that, from the calculated parallax information, three-dimensional information of the target object can be obtained. Further, the taken image by the camera unit 260 is recognized, and the target object (for example, a face, a hand, a body, or a finger of the user, or any object) is identified.

### B. Optimization of user interface

On the basis of detection information (for example, taken image by the camera unit 260) from the target object sensor 101, the information processing apparatus 100 identifies the target object (user who tries to perform an input operation, for example) and detects the distance and the position of the target object. Then, the information processing apparatus 100 selects a user interface for implementing an optimal input operation depending on the distance of the user. Further, the information processing apparatus 100 optimizes the user interface element for performing the operation through the selected user interface depending on the distance and the position of the user.

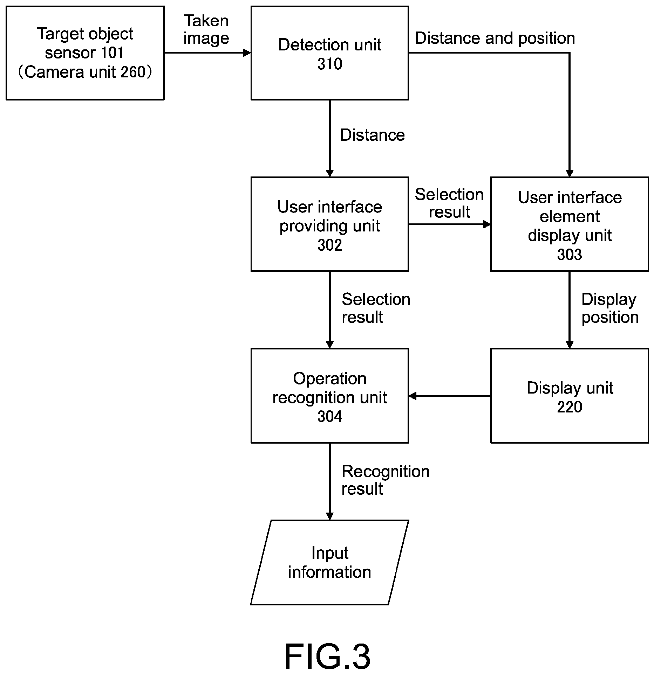

Fig. 3 schematically shows the functional structure for automatically selecting the user interface and optimizing the user interface element by the information processing apparatus 100. In order to achieve the function, the information processing apparatus 100 is provided with a detection unit 301, a user interface providing unit 302, a user interface element display unit 303, and an operation recognition unit 304. Those function modules 301 to 304 are achieved by executing a predetermined program by the CPU 211 of the control unit 210.

On the basis of the detection information from the target object sensor 101, such as the taken image by the camera unit 260, the detection unit 301 identifies the target object such as the user and detects the distance from the large screen to the target object and the position thereof.

On the basis of the distance of the target object detected by the detection unit 301, the user interface providing unit 302 automatically selects the user interface for achieving the optimal input operation by the target object.

The user interface element display unit 303 optimizes the user interface element for performing the input operation by using the selected user interface depending on the distance and the position of the target object. The user interface element includes, for example, an icon, a button, a menu part, an application window used by the user, and the like. The user interface element display unit 303 displays the user interface element on an appropriate position on the screen of the display unit 220 in an appropriate size in such a manner that the user as the target object easily operates the user interface element at a current position.

The operation recognition unit 304 recognizes an operation (for example, touching the menu) performed with respect to the screen of the display unit 220 through the user interface provided by the user interface providing unit 302. A recognition result is transmitted to an application that is being executed by the CPU 211 as input information from the user. The application executes a process corresponding to the input information.

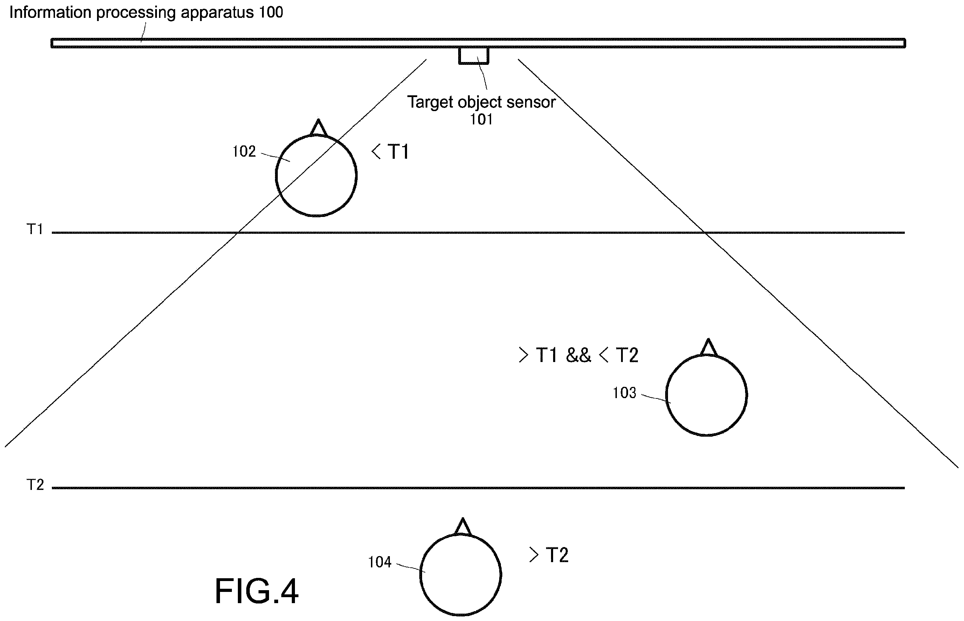

Fig. 4 shows a state in which a front area of the information processing apparatus 100 is viewed from above. As shown in Fig. 1, on the front surface of the information processing apparatus 100, a large screen of the display unit 220 is provided. For the operation by the user, a distance T1 from the large screen (T1>0) is defined as "short distance", a distance from T1 to T2 (T2>T1) is defined as "middle distance", a distance exceeding T2 is defined as "long distance".

The detection unit 301 identifies the target object on the basis of the detection information by the target object sensor 101 and detects the distance to the target object and the position thereof. For example, the detection unit 301 recognizes the taken image of the camera unit 260, identifies the target object such as the user, calculates three-dimensional information on the basis of the parallax information obtained from the taken image, and determines which area at the short distance, at the middle distance, or at the long distance the target object exists. Further, the detection unit 301 detects the position of the target object at the middle distance. Of course, the detection unit 301 may detect the position of the target object at the short distance or at the long distance. It should be noted that the target object may disappear from a detectable area (for example, angle of view of the camera unit 260) of the target object sensor 101. The case of disappearance of the target object includes the case where the user terminates the operation and moves away and the case where the user is just temporarily out of the detectable area and continues the operation. In the former case, it is desirable to terminate providing the corresponding user interface and displaying the user interface element. In the latter case, to immediately terminate providing the user interface and displaying the user interface element interrupts the operation, which causes inconvenience. In view of this, the detection unit 301 holds the information relating to the target object detected once, and if the target object is incapable of being detected, outputs the held information to the user interface providing unit 302 and the user interface element display unit 303 for a certain holding time period, thereby maintaining an operation environment for the user for the certain holding time period.

The user interface providing unit 302 automatically selects the user interface for achieving the optimal input operation in the target object on the basis of the distance of the target object detected by the detection unit 301.

In this embodiment, the user interface providing unit 302 provides, to the user 102 at the short distance, the user interface for the short distance, with which the user performs a touching operation on a touch panel provided on the large screen. Further, the user interface providing unit 302 provides, to the user 103 at the middle distance, the user interface for the middle distance with which a gesture input is performed. Further, the user interface providing unit 302 provides, to the user 104 at the long distance, the user interface for the long distance in which the remote controller 105 is used. It should be noted that, if the information relating to the target object output from the detection unit 301 is stopped, the user interface providing unit 302 stops providing the corresponding user interface.

The user interface element display unit 303 optimizes the user interface element for performing the input operation by using the selected user interface and optimizes the element depending on the distance and the position of the target object. Further, if the information relating to the target object which is output from the detection unit 301 is stopped, the user interface element display unit 303 stops displaying of the corresponding user interface element from the screen.

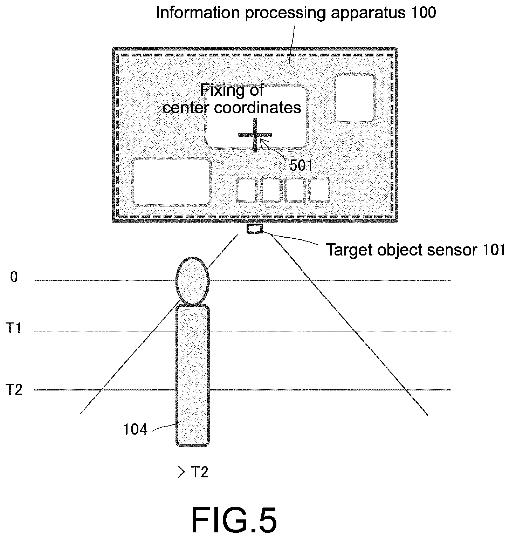

Fig. 5 shows the state in which the user interface element display unit 303 optimizes a user interface element 500 for the user 104 who exists at the long distance and displays the user interface element on the large screen. From the user 104 who exists at the long distance, it is possible to take a view of the entire large screen. In view of this, in the example shown in the figure, the user interface element display unit 303 fixes center coordinates 501 of the user interface element 500 such as an icon, a menu part, and an application window to the center of the large screen and enlarges and displays the parts of the user interface element 500 with the use of the entire large screen. As a result, it is easier for the user to roughly gesture or perform the remote control operation. Alternatively, the user interface element display unit 303 may not positively display the user interface element like an ambient mode.

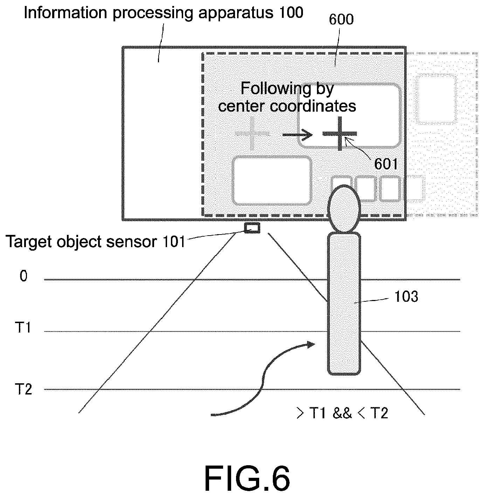

Further, Fig. 6 shows the state in which the user interface element display unit 303 optimizes a user interface element 600 for the user 103 who exists at the middle distance and displays the user interface element on the large screen. In the example shown in the figure, the user 103 moves from left to right within the range at the middle distance. The user interface element display unit 303 determines optimal center coordinates 601 of the user interface element 600 on the basis of a lateral position and a height (height to a face) of the user 103 or a condition, and causes a display position of the user interface element 600 to follow a movement of the user 103. The user 103 can perform a gesture operation (zoom, flick, or the like) and further perform pointing (with a finger, an eye line, a stick, or the like) while watching the user interface element 600 on each position where the users move. Further, the user interface element display unit 303 can not only move the lateral position of the user interface element 600 depending on the position of the user but also change the height of the user interface element depending on the height of the user, which makes it possible to display the element in front of the eyes of the user.

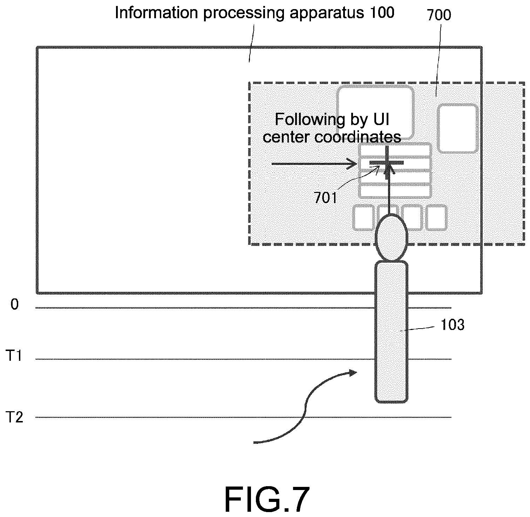

Fig. 7 shows the state in which, in the case where the information processing apparatus 100 has a larger screen, a user interface element 700 for the user 103 who exists at the middle distance is optimized, as in the case shown in Fig. 6. When the user 103 moves from left to right within the range at the middle distance, the user interface element display unit 303 causes a display position of the user interface element 700 to follow to the movement of the user 103 in accordance with a lateral position or a condition of the user 103. Further, the user interface element display unit 303 can not only move center coordinates 701 of the user interface element 700 in accordance with the position of the user in the lateral direction but also change the height of the center coordinates 701 in accordance with the height of the user, which makes it possible to display the user interface element in front of the eyes of the user.

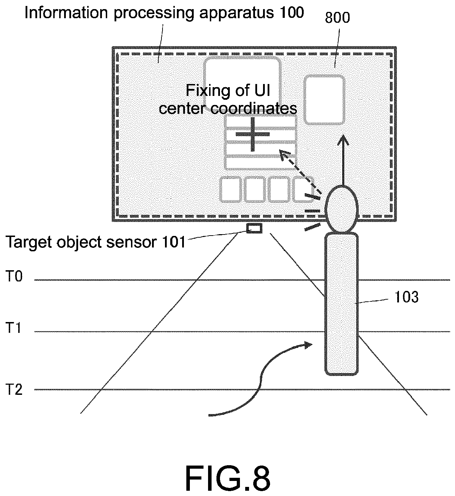

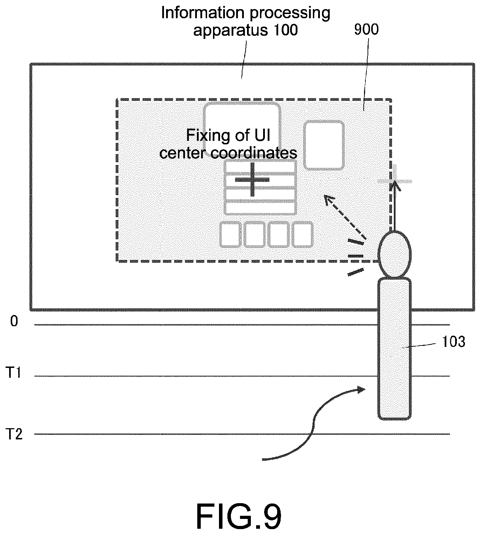

In comparison with Fig. 6 and Fig. 7, Fig. 8 and Fig. 9 respectively show an example of a screen display in which user interface elements 800 and 900 are not caused to follow the movement of the user 103 who exists at the middle distance. Even if the user 103 who exists at the middle distance moves to a position where the user wants to move, the user interface elements 800 and 900 are not changed. Therefore, unlike the example shown in Fig. 6 and Fig. 7, the user 103 has to change the position where the user 103 stands to the display position of the user interface elements 800 and 900, or squat down or stretch to fit the position of the eyes to the user interface elements 800 and 900, which causes inconvenience for the user.

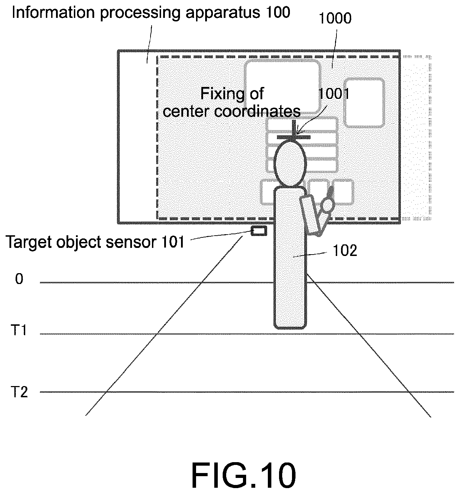

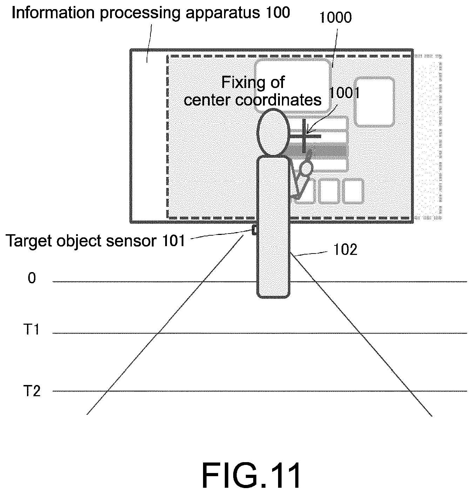

Further, Fig. 10 shows the state in which the user interface element display unit 303 optimizes a user interface element 1000 for the user 102 who exists at the short distance and displays the user interface element on the large screen. The user 102 who exists at the short distance can directly touch the large screen to make a decision such as a menu selection or a process in detail. As a previous step, the user interface element 1000 that displays further detailed information as compared to the case of the range at the middle distance or at the long distance is set, and center coordinates 1001 of the user interface element 1000 is optimized in accordance with a current position of the user 102. Further, it is thought that the user 102 who exists at the short distance may want to directly touch and carefully look at the user interface element. If the display position of the user interface element is moved as shown in Fig. 6, the user may feel this annoying. In view of this, the user interface element display unit 303 fixes the center coordinates 1001, that is, the display position of the user interface element 1000 at the short distance. Then, when the user 102 touches the menu part or the like on the large screen (that is, distance = 0) (see, Fig. 11), a corresponding decision or a detailed process is performed. It should be noted that the touching operation by the user 102 may be detected not by the touch panel 223 but by the target object sensor 101.

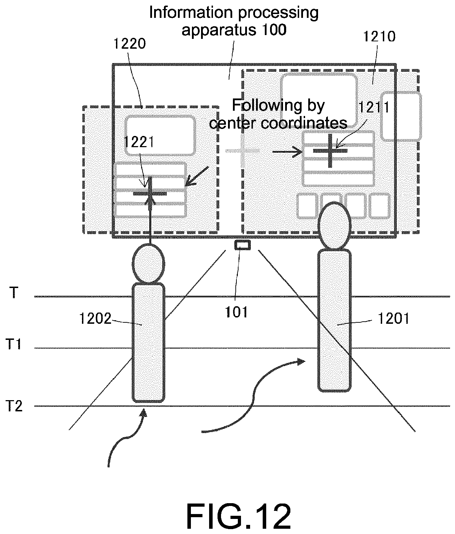

Further, Fig. 12 shows, as a modified example of Fig. 6, the state in which the user interface element display unit 303 optimizes the user interface element for a plurality of users who exist at the middle distance and displays the user interface element on the large screen. In the example shown in the figure, two users 1201 and 1202 perform operations with respect to the large screen within the range at the middle distance. Depending on a lateral position or a condition of the user 1201, the user interface element display unit 303 determines optimal center coordinates 1211 of a user interface element 1210 and causes a display position of the user interface element 1210 to follow a movement of the user 1201. Further, depending on a lateral position or a condition of the user 1202, the user interface element display unit 303 determines optimal center coordinates 1221 of a user interface element 1220 and causes a display position of the user interface element 1220 to follow a movement of the user 1202. The users 1201 and 1202 are capable of performing a gesture operation while watching the user interface elements 1210 and 1220 on each position where the users move.

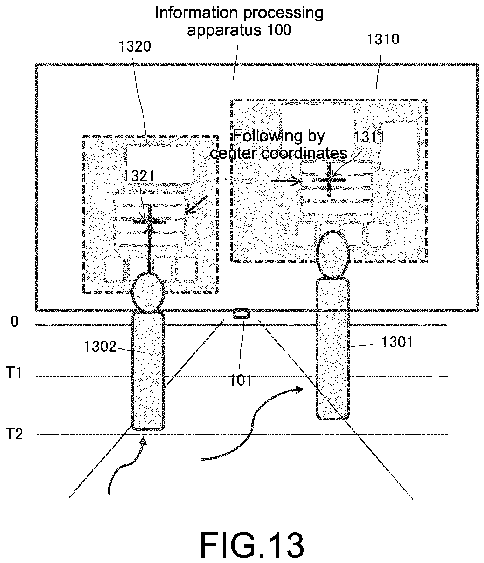

Further, as a modified example of Fig. 7, Fig. 13 shows the state in which, in the case where the information processing apparatus 100 has a larger screen, the user interface element display unit 303 optimizes the user interface element for a plurality of users who exist at the middle distance and displays the user interface element on the large screen. In the example shown in the figure, two users 1301 and 1302 perform an operation with respect to the large screen within the range at the middle distance. In accordance with a lateral position or a height of the user 1301 or a condition, the user interface element display unit 303 determines optimal center coordinates 1311 of a user interface element 1310 and causes a display position of the user interface element 1310 to follow a movement of the user 1301. Further, on the basis of a lateral position or a height of the user 1302 or a condition, the user interface element display unit 303 determines optimal center coordinates 1321 of a user interface element 1320 and causes a display position of the user interface element 1320 to follow a movement of the user 1302. The users 1301 and 1302 are capable of performing a gesture operation while watching the user interface elements 1310 and 1320, respectively, on each position where the users move.

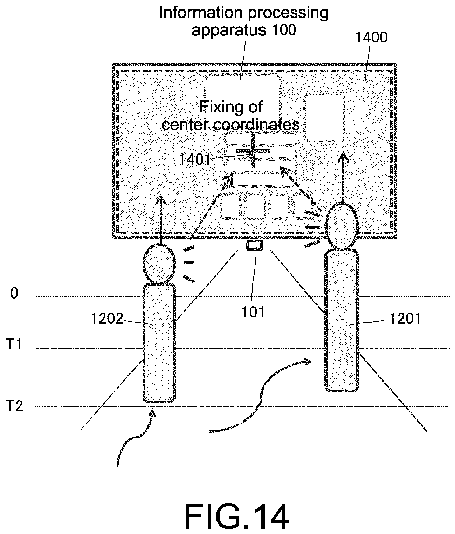

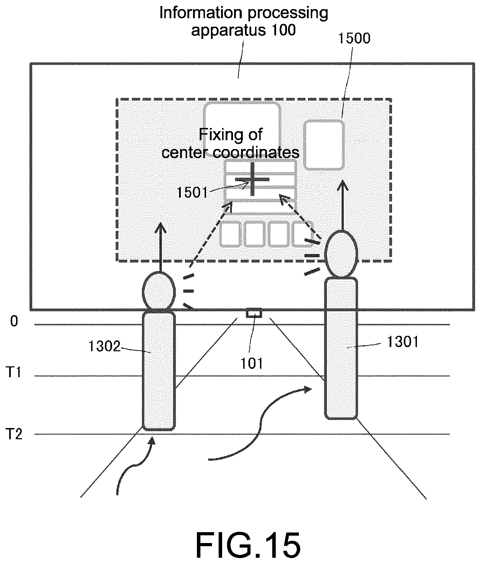

In comparison with Fig. 12 and Fig. 13, Fig. 14 and Fig. 15 respectively show an example of a screen display on which user interface elements 1400 and 1500 are not caused to follow the movement of the user 103 who exists at the middle distance. At the middle distance, even if the users 1201, 1202, 1301, and 1302 move to positions where the users want to perform the operations, center coordinates 1401 and 1501 of the user interface elements are not changed. Therefore, unlike the example shown in Fig. 12 and Fig. 13, the users 1201, 1202, 1301, and 1302 have to change the position where the users stand in order to fit to the display positions of the user interface elements 1400 and 1500, which causes inconvenience for the users.

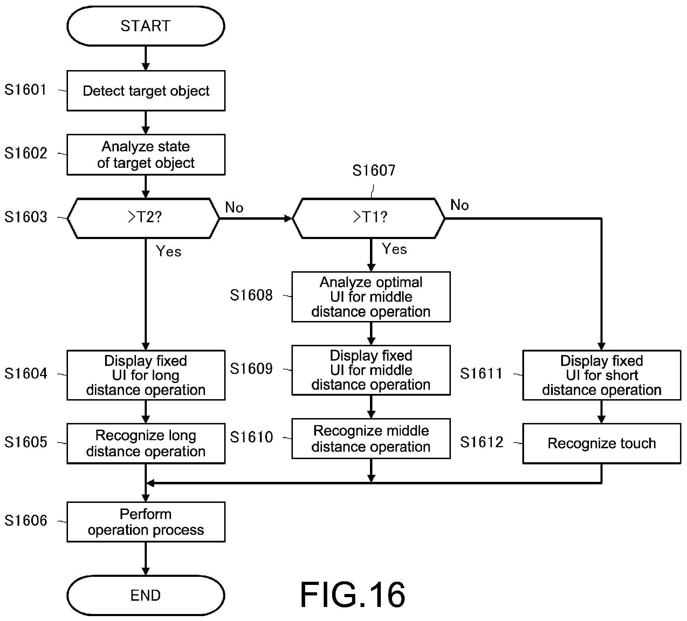

Fig. 16 is a flowchart showing a process flow for automatically selecting the user interface by the information processing apparatus 100 and optimizing the user interface element.

The detection unit 301 detects the target object from the detection information of the target object sensor 101 (Step S1601). For example, a taken image by the camera unit 260 is analyzed, thereby detecting the target object such as a face, a hand, a body, a finger of a user, and any object.

Subsequently, the detection unit 301 analyzes a state of the detected target object and analyzes a state of the target object, for example, the number or position thereof, a distribution thereof, or the like (Step S1602).

Then, a distance of the detected target object is determined. In the case where the distance of the target object exceeds T2, that is, the user is at the long distance (No in Step S1603), the user interface providing unit 302 provides the user interface for the long distance that uses the remote controller 105 (Step S1604). Further, the user who is at the long distance can take a view of the entire large screen. In view of this, the user interface element display unit 303 fixes the center coordinates of the user interface element to the center of the large screen. Alternatively, the user interface element display unit 303 may not positively display the user interface element like an ambient mode.

Then, the operation recognition unit 304 recognizes an operation with respect to the large screen through the user interface for the long distance that uses the remote controller 105 (Step S1605).

Further, when the distance of the target object is T1>T2, that is, the user is at the middle distance (No in Step S1603 and Yes in Step S1607), the user interface element display unit 303 calculates an optimal position of the user interface element on the basis of a result of the analysis in Step S1602 (That is, the number of uses, position of the user, distribution) (Step S1608). For example, in accordance with the position and the height of the user, the user interface element is displayed in front of the eyes of the user, or the size of the user interface element is changed. In the case of the large screen, when the user stands at a left end of the screen, if the user interface element is displayed on a right end of the screen, it is difficult to visually confirm the user interface element and perform the operation. For this reason, the optimization as described above is necessary.

Further, the user interface providing unit 302 provides the user interface for the middle distance with which the gesture input is performed (Step S1609). Then, on the basis of a result of the analysis in Step S1608, the user interface element display unit 303 displays the user interface element on the large screen. Further, the user interface element display unit 303 moves a lateral position of the user interface element in accordance with a position of the user.

Then, the operation recognition unit 304 recognizes the operation with respect to the large screen through the user interface for the middle distance by the gesture (Step S1610). As the operation in this case, a gesture operation (zoom, flick, or the like) and pointing (with a finger, an eye line, or a stick) are considered.

Further, in the case where the distance of the target object is less than T1, that is, the user is at the short distance (No in Step S1607), the user interface element display unit 303 provides user interface providing unit 302 provides the user interface for the short distance with which the touching operation to the touch panel provided on the large screen (Step S1611). Further, the user who is located at the short distance may want to directly touch and carefully look at the user interface element, but if the user interface element is moved, the user may feel this annoying. In view of this, the user interface element display unit 303 fixes the center coordinates of the user interface element.

Then, the operation recognition unit 304 recognizes the operation performed with respect to the large screen through the user interface for the short distance with which touching is performed (Step S1612).

The results of the recognitions of the long distance operation, the middle distance operation, and the short distance operation by the operation recognition unit 304 (Steps S1605, S1610, S1612) are transmitted to an application in execution by the CPU 211, for example, and are subjected to processing corresponding to the operations (Step S1606).

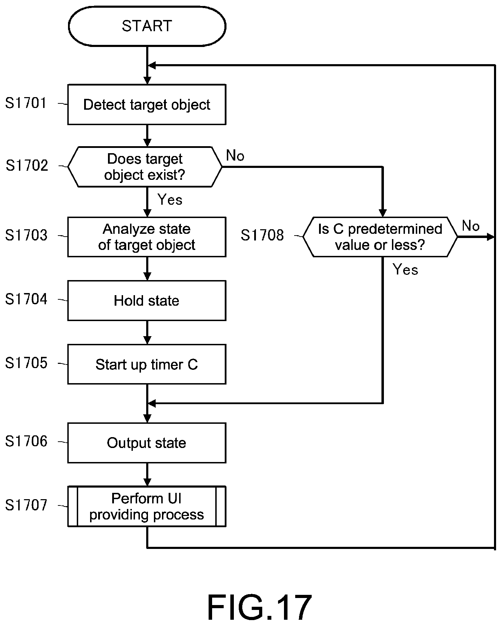

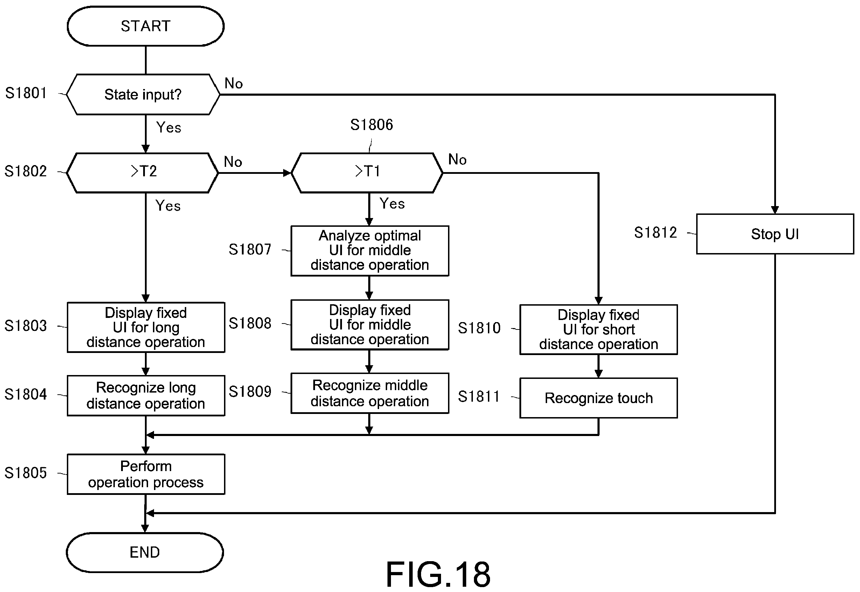

Fig. 17 and Fig. 18 are flowcharts showing other process flows for automatically selecting the user interface by the information processing apparatus 100 and optimizing the user interface element. In the process flow shown in Fig. 16, the case where the target object disappears is not considered, but in the process flows shown in Fig. 17 and Fig. 18, the case is considered. This point is a difference between the flow shown in Fig. 16 and the flows shown in Fig. 17 and Fig. 18.

Fig. 17 is the flowchart showing a process of outputting the detection result of the target object by the detection unit 301. As described above, the detection unit 301 holds information related to the target object detected once, and outputs the information, which is held for a certain time period even if the target object is not detected, to the user interface providing unit 302 and the user interface element display unit 303.

The detection unit 301 tries to detect the target object on the basis of the detection information of the target object sensor 101 (Step S1701).

Here, when it is confirmed that the target object exists (Yes in Step S1702), the detection unit 301 analyzes a state of the detected target object, for example, the number of target objects, positions thereof, a distribution, or the like (Step S1703). Then, the detection unit 301 holds the analyzed state of the target object (Step S1704) and starts a timer C up (Step S1705). It should be noted that detection unit 301 may track the target object. That is, if the detected target object has the same state as that already held, the detection unit 301 updates the held state in Step S1704, and resets the timer C in Step S1705 each time the update is performed to extend the state holding time period. For example, the user can extend the holding time period by touching the user interface element thereof on the large screen.

Then, the detection unit 301 outputs the detected state of the target object to the user interface providing unit 302 and the user interface element display unit 303 (Step S1706). In the user interface providing unit 302 and the user interface element display unit 303, a process of providing the user interface is performed (Step S1707).

Further, in the case where it may be impossible to detect the target object (No in Step S1702), the detection unit 301 checks whether the timer C is equal to or lower than a predetermined value or not (Step S1708). Then, if the timer C is equal to or lower than the predetermined value, that is, before the holding time period elapses (Yes in Step S1708), the detection unit 301 outputs the holding state of the target object to the user interface providing unit 302 and the user interface element display unit 303 (Step S1706). Then, in the user interface providing unit 302 and the user interface element display unit 303, a process of providing the user interface with respect to the target object which is incapable of being detected but is still held is performed (Step S1707).

Fig. 18 is a flowchart showing a process for providing the user interface to the target object by the user interface providing unit 302 and the user interface element display unit 303 in Step S1707.

First, it is checked whether there is an input of the state of the target object from the detection unit 301 (Step S1801).

In the case where there is an input of the state of the target object from the detection unit 301 (Yes in Step S1801), a distance of the detected target object is determined.

In the case where the distance exceeds T2, that is, the target object is at the long distance (No in Step S1802), the user interface providing unit 302 provides the user interface for the long distance which uses the remote controller 105 (Step S1803). Further, the user who is at the long distance can look over the entire large screen. In view of this, the user interface element display unit 303 fixes the center coordinates of the user interface element to the center of the large screen. Alternatively, the user interface element display unit 303 may not positively display the user interface element like an ambient mode.

Then, the operation recognition unit 304 recognizes an operation performed with respect to the large screen through the user interface for the long distance which uses the remote controller 105 (Step S1804).

Further, in the case where the distance of the target object is T1 < T2, that is, the target object is at the middle distance (No in Step S1802 and Yes in Step S1806), on the basis of the information (that is, the umber of users, positions thereof, a distribution) that is input from the detection unit 301, the user interface element display unit 303 calculates an optimal position of the user interface element (Step S1807). For example, in accordance with the position and the height of the user, the user interface element is disposed in such a manner as to be displayed in front of the eyes of the user, or the size of the user interface element is changed. In the case of the large screen, when the user stands on a left end of the screen, if the user interface element is displayed on a right end of the screen, it is difficult to perform visual confirmation and operation. For this reason, the optimization as described above is necessary.

Further, the user interface providing unit 302 provides the user interface for the middle distance on which the gesture input is performed (Step S1808). Then, on the basis of information input from the detection unit 301, the user interface element display unit 303 displays the user interface element on the large screen. Further, the user interface element display unit 303 moves a lateral position of the user interface element in accordance with the position of the user.

Then, the operation recognition unit 304 recognizes an operation performed with respect to the large screen through the user interface for the middle distance on which the user gestures (Step S1809). As the operation in this case, a gesture operation (zoom, flick, or the like) and pointing (with a finger, an eye line, or a stick) are considered.

Further, in the case where the distance of the target object is less than T1, that is, the target object is at the short distance (No in Step S1806), the user interface providing unit 302 provides the user interface for the short distance with which the touching operation is performed with respect to the touch panel provided on the large screen (Step S1810). Further, the user who is at the short distance may want to directly touch and carefully look at the user interface element. However, if the user interface element is moved, the user may feel this annoying. In view of this, the user interface element display unit 303 fixes the center coordinates of the user interface element.

Then, the operation recognition unit 304 recognizes an operation performed with respect to the large screen through the user interface for the short distance by the touch (Step S1811).

The recognition results of the long distance operation, the middle distance operation, and the short distance operation by the operation recognition unit 304 (Steps S1804, S1809, S1811) are transmitted to an application in execution by the CPU 211, for example, and a process corresponding to the operation is performed (Step S1805).

On the other hand, in the case where there is no input of the state of the target object from the detection unit 301 (No in Step S1801), providing the user interface is stopped (Step S1812). In the case where the target object, the state of which has been input, disappears, the user interface providing unit 302 stops providing the corresponding user interface. Further, the user interface element display unit 303 deletes the corresponding user interface element from the screen.

As described above, the information processing apparatus 100 to which the present technology is applied is capable of providing the appropriate user interfaces depending on the distances of the users who perform the input operations and optimizing the user interfaces by switching the display method of the user interface elements depending on the distances and the positions of the users.

In this specification, the embodiment in which the present technology is applied to the information processing apparatus is mainly described. However, irrespective of the size of the screen, it is possible to apply the present technology to various information processing apparatuses provided with a plurality of user interfaces.

Further, in this specification, the description is given on the embodiment in which the position where the user exists is sectioned into three areas of the short distance, the middle distance, and the long distance, depending on the distance from the screen, the user interface corresponding to the position is provided, and the display method for the user interface element is switched. For example, the position where the user exists may be sectioned into four or more, and providing the user interface and the display method for the user interface element may be controlled. Further, the users are grouped on the basis of a standard other than the distance, thereby controlling providing the user interface and the display method for the user interface element.

## Claims

1. An information input apparatus, comprising:
a display unit (220) having a screen on which information is displayed;
a detection unit (310) configured to detect a distance and a position of a target object with respect to the screen and to hold a corresponding detection result;
a user interface providing unit (302) configured to provide a user interface depending on the distance of the target object; and
a user interface element display unit (303) configured to display a user interface element on the screen depending on the distance and the position of the target object,
**characterized in that** the detection unit (310) is configured to output the detection result, which is held only for a certain time period even if the target object is not detected, to the user interface providing unit (302) and the user interface element display unit (303) in order to maintain an operating environment for the certain time period.

2. The information input apparatus according to claim 1, wherein
the detection unit (310) determines which range of a short distance, a middle distance, and a long distance the target object exists, the short distance being equal to or less than a first distance T1 (T1>0), the middle distance being within a range from the first distance T1 to a second distance T2 (T2>T1), the long distance exceeding the second distance T2, and
the user interface providing unit (302) provides a user interface for the short distance to the target object at the short distance, provides a user interface for the middle distance to the target object at the middle distance, and provides a user interface for the long distance to the target object at the long distance.

3. The information input apparatus according to claim 1 or 2, wherein the user interface providing unit (302) provides a user interface for performing a touch operation to the screen as the user interface for the short distance.

4. The information input apparatus according to any one of claims 1 through 3, wherein the user interface providing unit (302) provides a user interface for inputting a gesture as the user interface for the middle distance.

5. The information input apparatus according to any one of claims 1 though 4, wherein the user interface providing unit (302) provides a user interface that uses a remote controller as the user interface for the long distance.

6. The information input apparatus according to any one of claims 1 through 5, wherein the user interface element display unit (303) displays center coordinates of the user interface element for the target object determined to be at the long distance with the center coordinates fixed to a predetermined position on the screen.

7. The information input apparatus according to any one of claims 1 through 6, wherein the user interface element display unit (303) displays center coordinates of the user interface element for the target object determined to be at the middle distance with the center coordinates moved to a position on the screen corresponding to the position of the target object.

8. The information input apparatus according to any one of claims 1 through 7, wherein the user interface element display unit (303) displays center coordinates of the user interface element for the target object determined to be at the short distance with the center coordinates fixed to a predetermined position on the screen.

9. The information input apparatus according to any one of claims 1 through 8, wherein the user interface element display unit (303) displays a more detailed user interface element for the target object determined to be at the short distance.

10. The information input apparatus according to any one of claims 1 through 9, wherein the detection unit (310) analyzes a state of the target object at the middle distance, and the user interface element display unit displays the user interface element depending on the state of the target object.

11. The information input apparatus according to claim 10, wherein
the detection unit (310) detects the number of users as target objects and positions of the users, and
the user interface element display unit (303) displays the user interface element for each detected user with the user interface element caused to follow the position of each user.

12. The information input apparatus according to claim 1, wherein
when the information relating to the target object output from the detection unit is stopped, the user interface providing unit (302) stops providing a corresponding user interface, and the user interface element display unit (303) stops displaying the user interface element.

13. An information input method, comprising:
detecting a distance and a position of a target object with respect to a screen on which information is displayed and holding a corresponding detection result;
providing a user interface depending on the distance of the target object; and
displaying a user interface element on the screen depending on the distance and the position of the target object,
**characterized in that** the method further comprises outputting the detection result, which is held only for a certain time period even if the target object is not detected, to a user interface providing unit (302) and a user interface element display unit (303) in order to maintain an operating environment for the certain time period.

14. A computer program that is computer-readable and causes a computer to function as
a display unit (220) having a screen on which information is displayed,
a detection unit (310) configured to detect a distance and a position of a target object with respect to the screen and to hold a corresponding detection result,
a user interface providing unit (302) configured to provide a user interface depending on the distance of the target object, and
a user interface element display unit (303) configured to display a user interface element on the screen depending on the distance and the position of the target object,
**characterized in that** the detection unit (310) is configured to output the detection result, which is held only for a certain time period even if the target object is not detected, to the user interface providing unit (301) and the user interface element display unit (303) in order to maintain an operating environment for the certain time period.

## Patentansprüche

1. Informationseingabevorrichtung, Folgendes umfassend:
eine Anzeigeeinheit (220), die einen Bildschirm aufweist, auf dem Informationen angezeigt werden,
eine Erkennungseinheit (310), die dafür konfiguriert ist, eine Entfernung und eine Position eines Zielobjekts im Verhältnis zu dem Bildschirm zu erkennen und ein entsprechendes Erkennungsergebnis vorzuhalten,
eine Benutzerschnittstellen-Bereitstellungseinheit (302), die dafür konfiguriert ist, abhängig von der Entfernung des Zielobjekts eine Benutzerschnittstelle bereitzustellen, und
eine Benutzerschnittstellenelement-Anzeigeeinheit (303), die dafür konfiguriert ist, abhängig von der Entfernung und der Position des Zielobjekts ein Benutzerschnittstellenelement auf dem Bildschirm anzuzeigen,
**dadurch gekennzeichnet, dass** die Erkennungseinheit (310) dafür konfiguriert ist, das Erkennungsergebnis, das nur für eine bestimmte Zeitspanne vorgehalten wird, auch wenn das Zielobjekt nicht erkannt wurde, an die Benutzerschnittstellen-Bereitstellungseinheit (302) und die Benutzerschnittstellenelement-Anzeigeeinheit (303) auszugeben, um für die bestimmte Zeitspanne eine Betriebsumgebung aufrechtzuerhalten.

2. Informationseingabevorrichtung nach Anspruch 1, wobei
die Erkennungseinheit (310) bestimmt, in welchem Bereich einer kleinen Entfernung, einer mittleren Entfernung und einer großen Entfernung das Zielobjekt vorhanden ist, wobei die kleine Entfernung gleich oder kleiner als eine erste Entfernung T1 (T1>0) ist, die mittlere Entfernung in einem Bereich von der ersten Entfernung T1 bis zu einer zweiten Entfernung T2 (T2>T1) liegt, die große Entfernung die zweite Entfernung T2 übersteigt, und
die Benutzerschnittstellen-Bereitstellungseinheit (302) bei der kleinen Entfernung eine Benutzerschnittstelle für die kleine Entfernung zu dem Zielobjekt bereitstellt, bei der mittleren Entfernung eine Benutzerschnittstelle für die mittlere Entfernung zu dem Zielobjekt bereitstellt und bei der großen Entfernung eine Benutzerschnittstelle für die große Entfernung zu dem Zielobjekt bereitstellt.

3. Informationseingabevorrichtung nach Anspruch 1 oder 2, wobei die Benutzerschnittstellen-Bereitstellungseinheit (302) eine Benutzerschnittstelle zum Durchführen eines Touch-Vorgangs auf dem Bildschirm als die Benutzerschnittstelle für die kleine Entfernung bereitstellt.

4. Informationseingabevorrichtung nach einem der Ansprüche 1 bis 3, wobei die Benutzerschnittstellen-Bereitstellungseinheit (302) eine Benutzerschnittstelle zum Eingeben einer Geste als die Benutzerschnittstelle für die mittlere Entfernung bereitstellt.

5. Informationseingabevorrichtung nach einem der Ansprüche 1 bis 4, wobei die Benutzerschnittstellen-Bereitstellungseinheit (302) eine Benutzerschnittstelle, die eine Fernsteuerung verwendet, als die Benutzerschnittstelle für die große Entfernung bereitstellt.

6. Informationseingabevorrichtung nach einem der Ansprüche 1 bis 5, wobei die Benutzerschnittstellenelement-Anzeigeeinheit (303) Mittelpunktkoordinaten des Benutzerschnittstellenelements für das Zielobjekt anzeigt, das in der großen Entfernung bestimmt wurde, wobei die Mittelpunktkoordinaten an einer festgelegten Position auf dem Bildschirm fixiert sind.

7. Informationseingabevorrichtung nach einem der Ansprüche 1 bis 6, wobei die Benutzerschnittstellenelement-Anzeigeeinheit (303) Mittelpunktkoordinaten des Benutzerschnittstellenelements für das Zielobjekt anzeigt, das in der mittleren Entfernung bestimmt wurde, wobei die Mittelpunktkoordinaten an eine Position auf dem Bildschirm verschoben sind, die der Position des Zielobjekts entspricht.

8. Informationseingabevorrichtung nach einem der Ansprüche 1 bis 7, wobei die Benutzerschnittstellenelement-Anzeigeeinheit (303) Mittelpunktkoordinaten des Benutzerschnittstellenelements für das Zielobjekt anzeigt, das in der kleinen Entfernung bestimmt wurde, wobei die Mittelpunktkoordinaten an einer festgelegten Position auf dem Bildschirm fixiert sind.

9. Informationseingabevorrichtung nach einem der Ansprüche 1 bis 8, wobei die Benutzerschnittstellenelement-Anzeigeeinheit (303) ein detaillierteres Benutzerschnittstellenelement für das Zielobjekt anzeigt, das in der kleinen Entfernung bestimmt wurde.

10. Informationseingabevorrichtung nach einem der Ansprüche 1 bis 9, wobei die Erkennungseinheit (310) einen Zustand des Zielobjekts in der mittleren Entfernung analysiert und die Benutzerschnittstellenelement-Anzeigeeinheit das Benutzerschnittstellenelement abhängig vom Zustand des Zielobjekts anzeigt.

11. Informationseingabevorrichtung nach Anspruch 10, wobei
die Erkennungseinheit (310) die Anzahl von Benutzern als Zielobjekte und Positionen der Benutzer erkennt und die Benutzerschnittstellenelement-Anzeigeeinheit (303) das Benutzerschnittstellenelement für jeden erkannten Benutzer anzeigt, wobei das Benutzerschnittstellenelement veranlasst wird, der Position jedes Benutzers zu folgen.

12. Informationseingabevorrichtung nach Anspruch 1, wobei, wenn die Informationen bezüglich des von der Erkennungseinheit ausgegebenen Zielobjekts gestoppt werden, die Benutzerschnittstellen-Bereitstellungseinheit (302) das Bereitstellen einer entsprechenden Benutzerschnittstelle stoppt und die Benutzerschnittstellenelement-Anzeigeeinheit (303) das Anzeigen des Benutzerschnittstellenelements stoppt.

13. Informationseingabeverfahren, Folgendes umfassend:
Erkennen einer Entfernung und einer Position eines Zielobjekts im Verhältnis zu einem Bildschirm, auf dem Informationen angezeigt werden, und Vorhalten eines entsprechenden Erkennungsergebnisses,
Bereitstellen einer Benutzerschnittstelle abhängig von der Entfernung des Zielobjekts und
Anzeigen eines Benutzerschnittstellenelements auf dem Bildschirm abhängig von der Entfernung und der Position des Zielobjekts,
**dadurch gekennzeichnet, dass** das Verfahren ferner das Ausgeben des Erkennungsergebnisses, das nur für eine bestimmte Zeitspanne vorgehalten wird, auch wenn das Zielobjekt nicht erkannt wurde, an eine Benutzerschnittstellen-Bereitstellungseinheit (302) und eine Benutzerschnittstellenelement-Anzeigeeinheit (303), um für die bestimmte Zeitspanne eine Betriebsumgebung aufrechtzuerhalten, umfasst.

14. Computerprogramm, das computerlesbar ist und einen Computer veranlasst, als Folgendes zu fungieren:
eine Anzeigeeinheit (220), die einen Bildschirm aufweist, auf dem Informationen angezeigt werden,
eine Erkennungseinheit (310), die dafür konfiguriert ist, eine Entfernung und eine Position eines Zielobjekts im Verhältnis zu dem Bildschirm zu erkennen und ein entsprechendes Erkennungsergebnis vorzuhalten,
eine Benutzerschnittstellen-Bereitstellungseinheit (302), die dafür konfiguriert ist, abhängig von der Entfernung des Zielobjekts eine Benutzerschnittstelle bereitzustellen, und
eine Benutzerschnittstellenelement-Anzeigeeinheit (303), die dafür konfiguriert ist, abhängig von der Entfernung und der Position des Zielobjekts ein Benutzerschnittstellenelement auf dem Bildschirm anzuzeigen,
**dadurch gekennzeichnet, dass** die Erkennungseinheit (310) dafür konfiguriert ist, das Erkennungsergebnis, das nur für eine bestimmte Zeitspanne vorgehalten wird, auch wenn das Zielobjekt nicht erkannt wurde, an die Benutzerschnittstellen-Bereitstellungseinheit (301) und die Benutzerschnittstellenelement-Anzeigeeinheit (303) auszugeben, um für die bestimmte Zeitspanne eine Betriebsumgebung aufrechtzuerhalten.

## Revendications

1. Appareil d'entrée d'informations, comprenant :
une unité d'affichage (220) ayant un écran sur lequel des informations sont affichées ;
une unité de détection (310) configurée pour détecter une distance et une position d'un objet cible par rapport à l'écran et pour conserver un résultat de détection correspondant ;
une unité de fourniture d'interface utilisateur (302) configurée pour fournir une interface utilisateur en fonction de la distance de l'objet cible ; et
une unité d'affichage d'élément d'interface utilisateur (303) configurée pour afficher un élément d'interface utilisateur à l'écran en fonction de la distance et de la position de l'objet cible,
**caractérisé en ce que** l'unité de détection (310) est configurée pour délivrer en sortie le résultat de la détection, qui n'est conservé que pendant une certaine période de temps même si l'objet cible n'est pas détecté, à l'unité de fourniture d'interface utilisateur (302) et à l'unité d'affichage d'élément d'interface utilisateur (303) afin de maintenir un environnement de fonctionnement pendant la certaine période de temps.

2. Appareil d'entrée d'informations selon la revendication 1, dans lequel :
l'unité de détection (310) détermine à quelle distance parmi une courte distance, une distance moyenne et une longue distance, se situe l'objet, la courte distance étant égale ou inférieure à une première distance T1 (T1 > 0), la distance moyenne étant comprise entre la première distance T1 et une seconde distance T2 (T2 > T1), la longue distance étant plus élevée que la seconde distance T2, et
l'unité de fourniture d'interface utilisateur (302) fournit une interface utilisateur pour la courte distance à l'objet cible situé à courte distance, fournit une interface utilisateur pour la distance moyenne à l'objet cible situé à distance moyenne, et fournit une interface utilisateur pour la longue distance à l'objet cible situé à longue distance.

3. Appareil d'entrée d'informations selon la revendication 1 ou la revendication 2, dans lequel l'unité de fourniture d'interface utilisateur (302) fournit une interface utilisateur pour effectuer une opération tactile sur l'écran en tant qu'interface utilisateur pour la courte distance.

4. Appareil d'entrée d'informations selon l'une quelconque des revendications 1 à 3, dans lequel l'unité de fourniture d'interface utilisateur (302) fournit une interface utilisateur pour l'entrée d'un geste en tant qu'interface utilisateur pour la distance moyenne.

5. Appareil d'entrée d'informations selon l'une quelconque des revendications 1 à 4, dans lequel l'unité de fourniture d'interface utilisateur (302) fournit une interface utilisateur qui utilise une télécommande en tant qu'interface utilisateur pour la longue distance.

6. Appareil d'entrée d'informations selon l'une quelconque des revendications 1 à 5, dans lequel l'unité d'affichage d'élément d'interface utilisateur (303) affiche les coordonnées du centre de l'élément d'interface utilisateur pour l'objet cible déterminé comme étant situé à longue distance, les coordonnées du centre étant fixées à une position prédéterminée sur l'écran.

7. Appareil d'entrée d'informations selon l'une quelconque des revendications 1 à 6, dans lequel l'unité d'affichage d'élément d'interface utilisateur (303) affiche les coordonnées du centre de l'élément d'interface utilisateur pour l'objet cible déterminé comme étant situé à moyenne distance, les coordonnées du centre étant déplacées à une position sur l'écran correspondant à la position de l'objet cible.

8. Appareil d'entrée d'informations selon l'une quelconque des revendications 1 à 7, dans lequel l'unité d'affichage d'élément d'interface utilisateur (303) affiche les coordonnées du centre de l'élément d'interface utilisateur pour l'objet cible déterminé comme étant situé à courte distance, les coordonnées du centre étant fixées à une position prédéterminée sur l'écran.

9. Appareil d'entrée d'informations selon l'une quelconque des revendications 1 à 8, dans lequel l'unité d'affichage d'élément d'interface utilisateur (303) affiche un élément d'interface utilisateur plus détaillé pour l'objet cible déterminé comme étant situé à courte distance.

10. Appareil d'entrée d'informations selon l'une quelconque des revendications 1 à 9, dans lequel l'unité de détection (310) analyse un état de l'objet cible situé à distance moyenne, et l'unité d'affichage d'élément d'interface utilisateur affiche l'élément d'interface utilisateur en fonction de l'état de l'objet cible.

11. Appareil d'entrée d'informations selon la revendication 10, dans lequel :
l'unité de détection (310) détecte le nombre d'utilisateurs en tant qu'objets cibles et les positions des utilisateurs, et
l'unité d'affichage d'élément d'interface utilisateur (303) affiche l'élément d'interface utilisateur pour chaque utilisateur détecté, l'élément d'interface utilisateur étant amené à suivre la position de chaque utilisateur.

12. Appareil d'entrée d'informations selon la revendication 1, dans lequel :
lorsque les informations relatives à l'objet cible émises par l'unité de détection sont arrêtées, l'unité de fourniture d'interface utilisateur (302) cesse de fournir une interface utilisateur correspondante, et
l'unité d'affichage d'élément d'interface utilisateur (303) cesse d'afficher l'élément d'interface utilisateur.

13. Procédé d'entrée d'informations, comprenant les étapes suivantes :
détecter une distance et une position d'un objet cible par rapport à un écran sur lequel des informations sont affichées, et maintenir un résultat de détection correspondant ;
fournir une interface utilisateur en fonction de la distance de l'objet cible ; et
afficher à l'écran un élément d'interface utilisateur en fonction de la distance et de la position de l'objet cible,
**caractérisé en ce que** le procédé comprend en outre de délivrer en sortie le résultat de la détection, qui n'est conservé que pendant une certaine période de temps même si l'objet cible n'est pas détecté, vers une unité de fourniture d'interface utilisateur (302) et une unité d'affichage d'élément d'interface utilisateur (303) afin de maintenir un environnement de fonctionnement pendant la certaine période de temps.

14. Programme informatique lisible par ordinateur et amène un ordinateur à fonctionner comme :
une unité d'affichage (220) ayant un écran sur lequel des informations sont affichées ;
une unité de détection (310) configurée pour détecter une distance et une position d'un objet cible par rapport à l'écran et pour conserver un résultat de détection correspondant ;
une unité de fourniture d'interface utilisateur (302) configurée pour fournir une interface utilisateur en fonction de la distance de l'objet cible ; et
une unité d'affichage d'élément d'interface utilisateur (303) configurée pour afficher un élément d'interface utilisateur à l'écran en fonction de la distance et de la position de l'objet cible,
**caractérisé en ce que** l'unité de détection (310) est configurée pour délivrer en sortie le résultat de la détection, qui n'est conservé que pendant une certaine période de temps même si l'objet cible n'est pas détecté, à l'unité de fourniture d'interface utilisateur (301) et à l'unité d'affichage d'élément d'interface utilisateur (303) afin de maintenir un environnement de fonctionnement pendant la certaine période de temps.
